# FASCICULE DE BREVET EUROPEEN

(11) **EP 1 166 940 B1**
(45) Date de publication et mention de la délivrance du brevet: **14.11.2007**
(21) Numéro de dépôt: 01401501.0
(22) Date de dépôt: 11.06.2001
(51) Int. Cl.: B23K 9/16

(54) **Procédé de soudage mig de l'aluminium et de ses alliages avec gaz de protection du type Ar/He/02**
Verfahren zum MIG Schweissen von Al Legierungen mit Ar/He/O2-Schutzgas
MIG welding method for Al alloys with Ar/He/O2 protective gas

(30) Priorité: 22.06.2000 FR 0008018
(43) Date de publication de la demande: 02.01.2002
(73) Titulaire: L'AIR LIQUIDE, Société Anonyme pour l'Etude et l'Exploitation des Procédés Georges Claude, 75007 Paris (FR)
(72) Inventeur: Fortain, Jean-Marie, 95520 Osny (FR); Lefebvre, Philippe, 95310 Saint Quen l'Aumone (FR); Mouton, Jean-Yves, 95800 Cergy Pontoise (FR); Plottier, Gérard, 93380 Pierrefitte (FR)
(74) Mandataire: Pittis, Olivier

(56) Documents cités:
- EP-A- 0 442 475
- EP-A- 0 639 423
- US-A- 4 071 732

## Description

La présente invention porte sur un procédé MIG (Metal Inert Gas) de soudage à l'arc électrique de l'aluminium et des alliages d'aluminium, à régime pulsé ou à régime spray, c'est-à-dire à pulvérisation axiale, à l'exception d'un procédé à régime spray avec courant modulé.

Le procédé MIG de soudage à l'arc électrique est largement utilisé dans l'industrie, y compris dans celle du soudage de l'aluminium.

Les gaz de protection jouent un rôle essentiel dans la performance de ce procédé.

Ainsi, l'argon n'autorise pas de vitesses de soudage élevées et peut occasionner, en soudage automatique, des instabilités d'arc au-delà de 500 A. La forme caractéristique des pénétrations étroites obtenues sous argon en régime spray s'accommode mal d'un soudage par interpénétration.

Par ailleurs, les mélanges d'argon et d'hélium (ci-après Ar/He) et l'hélium seul permettent d'augmenter la profondeur de pénétration et sa largeur en racine donc peuvent permettre de s'affranchir de préparations coûteuses et ce, de façon d'autant plus que la teneur en hélium est élevée dans les mélanges Ar/He.

En d'autres termes, à épaisseur constante, l'hélium autorise donc des vitesses de soudage d'autant plus élevées que sa teneur est importante.

Toutefois, si la compacité des cordons se trouve aussi généralement améliorée par la présence d'hélium, ceci est au détriment de l'aspect des cordons qui sont moins brillants que sous argon pur.

Les mélanges Ar/He présentent donc un intérêt notable, en termes de qualité et de productivité, tant en soudage manuel (par exemple pour un mélange du type Ar + 20% He) qu'en soudage automatique (par exemple pour des mélanges du type Ar + 50% à 70% He), en regard, toutefois, d'un coût non négligeable lié à la teneur en hélium.

Pour des applications n'imposant pas forcément de satisfaire ses deux critères, il peut être judicieux de s'intéresser à d'autres types de mélanges.

Ainsi, le document EP-A-639423 propose pour les procédés TIG et MIG d'utiliser un gaz de soudage de type argon ou argon/hélium contenant, en outre, de 100 à 7000 ppm en vol. de CO₂ et/ou de O₂.

En outre, le document DE-A-4241982 propose, quant à lui, d'utiliser de l'argon ou un mélange Ar/He additionné, en outre, de 80 à 250 ppm en vol. d'azote.

Le document EP-A-442 475 préconise, quant à lui, un soudage avec électrode consommable utilisant un mélange gazeux constitué de 0.5 à 1.25 % en volume de dioxyde de carbone, de 30 à 40 % d'hélium et le solde étant de l'argon.

Le document US-A-4,071,732 porte sur un mélange formé d'un gaz inerte contenant moins de 30% de dioxyde de carbone ou moins de 5% d'oxygène ; toutefois, les exemples de ce document ne décrivent que des mélanges d'argon et de dioxyde de carbone à des teneurs de l'ordre de 5 ou 15%.

Il est à souligner qu'au niveau de l'accroissement des performances, aucun de ces procédés n'est pleinement satisfaisant du point de vue industriel.

En outre, en soudage MIG spray modulé, c'est-à-dire avec mise en oeuvre d'une modulation du courant de soudage, il a déjà été préconisé d'utiliser un gaz ou un mélange gazeux de protection formé d'argon, d'hélium ou leurs mélanges, additionné de 0,01% à 1,80% de dioxyde de carbone et/ou d'oxygène, ainsi que décrit dans EP-A-909604. Toutefois, dans ce cas, des modulations de courant à une fréquence de moins de 60 Hz sont appliquées au courant de manière à pouvoir dégazer le bain de soudure pour en éliminer les inclusions gazeuses, en particulier l'hydrogène diffusible, susceptibles de s'y trouver. En effet, les procédés MIG à régime spray avec modulations du courant sont mis en oeuvre lorsqu'on souhaite obtenir une qualité élevée du joint de soudure, mais sans nécessité réelle d'atteindre une vitesse de soudage importante.

Dès lors, le problème qui se pose est d'améliorer les procédés de soudage MIG connus ne mettant pas en oeuvre de modulation du courant de soudage, en particulier les procédés MIG à régime spray non modulé, c'est-à-dire sans modulation du courant de soudage, ainsi que ceux à régime pulsé, de manière à pouvoir obtenir des performances élevées en termes de productivité et de vitesse de soudage.

En effet, les procédés MIG à régime spray non modulé (sans modulation du courant) et ceux à régime pulsé sont beaucoup plus adaptés lorsqu'on souhaite améliorer la productivité plutôt que la qualité, c'est-à-dire l'aspect des soudures.

Jusqu'à présent les procédés MIG à régime non modulé ou à régime pulsé ne sont pas ou peu utilisés pour le soudage de l'aluminium ou de ses alliages, lorsque la protection gazeuse contient de l'oxygène.

En effet, il est habituellement reconnu que la présence d'oxygène dans la protection gazeuse peut avoir un impact néfaste sur la soudure étant donné que, lorsque de l'oxygène est incorporé dans la protection gazeuse, celui-ci peut se combiner facilement aux atomes d'aluminium et il en résulte des inclusions solides d'alumine (Al₂O₃) dans la soudure, lesquelles ont un impact négatif sur les qualités mécaniques de ladite soudure. Ceci a d'ailleurs été vérifié pour des teneurs importantes en oxygène, c'est-à-dire des teneurs supérieures à 2% d'oxygène, ainsi que pour des teneurs importantes en dioxyde de carbone, c'est-à-dire, là encore, des teneurs supérieures à 2%.

Cependant, à l'inverse, la présence d'oxygène dans le flux gazeux de protection conduit à des performances de productivité acceptables au plan industriel.

Il s'ensuit alors que le problème qui se pose est de proposer un procédé de soudage MIG de l'aluminium et de ses alliages permettant d'aboutir à la fois à une productivité élevée et acceptable industriellement, et à un taux faible d'inclusions d'alumine dans la soudure sans incidence majeure ou notable sur les caractéristiques mécaniques des joints soudés.

La solution apportée par la présente invention repose alors sur un procédé de soudage MIG à régime spray sans modulation de courant ou à régime pulsé, de l'aluminium et des alliages d'aluminium, avec mise en oeuvre d'une protection gazeuse d'au moins une partie de la zone de soudage, caractérisé en ce que la protection gazeuse est un mélange gazeux constitué de 0,01% à 1,80% d'oxygène et de 20% à 98,2 % d'hélium, le solde étant éventuellement constitué par de l'argon.

D'autres caractéristiques du procédé de l'invention sont données ci-après :
- le gaz de protection contient de 0,9% à 1,80% d'oxygène, de 15% à 98,20% d'hélium et le solde étant de l'argon.
- le mélange gazeux de protection contient au moins 1% d'oxygène, de préférence au moins 1.1 % d'oxygène, préférentiellement encore au moins 1.2 % d'oxygène.
- le mélange gazeux de protection contient au plus 1.70 % d'oxygène, de préférence au plus 1,65% d'oxygène.
- on met en oeuvre un fil fusible plein.
- la vitesse de soudage est de 0.25 m/min à 1.20 m/min, de préférence de 0.60 à 1 m/min.
- la vitesse de fil est de 2.5 m/min à 20 m/min, de préférence de 4 m/min à 17 m/min.
- l'intensité moyenne de soudage est de 40 A à 450 A et/ou en ce que la tension moyenne de soudage est de 15 V à 40 V.
- le procédé est à régime pulsé et/ou l'intensité de soudage est de 120 A à 350 A et/ou la tension moyenne de soudage est de 20 V à 30 V.
- le procédé est à régime spray et/ou l'intensité de soudage est de 180 A à 450 A et/ou la tension moyenne de soudage est de 20 V à 39 V.

La présente invention repose donc sur un contrôle précis de la teneur en oxygène dans l'hélium ou un mélange d'argon et d'hélium, la teneur en oxygène ne devant pas dépasser environ 1,80 % au maximum ; le mélange gazeux ainsi formé constituant la protection gazeuse utilisée lors de la mise en oeuvre du procédé MIG.

Il est à souligner que tout procédé MIG à régime spray avec modulation du courant de soudage est exclu de l'invention.

L'invention va maintenant être mieux comprise grâce aux exemples ci-après, donnés à titre illustratif mais non limitatif, dont les résultats sont schématisés sur les figures ci-annexées.

### Exemples

Afin de montrer l'efficacité du procédé MIG selon l'invention, plusieurs essais comparatifs ont été réalisés.

Dans le cadre de ces essais, des pièces d'aluminium (nuances 5000, et 6000 suivant les normes NFEN 485, 487, 515 et 573) ont été soudées selon un procédé MIG à régime spray non modulé et à régime pulsé, en utilisant une protection gazeuse constituée d'argon additionné de 1 à 1.5% de O₂.

Le générateur de courant est un générateur 480 TR16 commercialisé par la société LA SOUDURE AUTOGENE FRANCAISE.

Le fil fusible en tant que métal d'apport mis en oeuvre est, dans tous les cas, un fil de 1,2 mm de diamètre de type 5356 (suivant les normes AWS A5.10 ou NF A50.403).

Les pièces d'aluminium sont, préalablement au soudage, préparées par grattage mécanique.

Les autres paramètres de soudage sont donnés dans le tableau I ci-après, dans lequel :
- Vfil : représente la vitesse d'avance du fil fusible
- Ic : représente l'intensité du courant de crête
- Ib : représente l'intensité de base
- Imoy : représente l'intensité moyenne
- Uc : représente la tension de crête
- Umoy : représente la tension moyenne
- Fp : la fréquence de pulsation de courant (en MIG à régime pulsé)
- Tp : le temps de pulsation de courant (en MIG à régime pulsé)
-

**Tableau I : Paramètres de soudage pour les deux régimes de transfert**

| Régime | Spray | Pulsé |
|---|---|---|
| Nuance de la pièce d'aluminium | 5000 | 5000 |
| Epaisseur (mm) | 6 | 6 |
| Vfil (m/mn) | 12.5 | 9 |
| Ic (A) | - | 330 |
| Ibase (A) | - | 110 |
| Imoy (A) | 220-240 | 154-162 |
| Uc (V) | - | 28 |
| Umoy(V) | 21-23 | 20-23 |
| Fp (Hz) | - | 155 |
| Tp (ms) | - | 1.6 |

Les résultats obtenus sont donnés ci-après, après évaluation des performances en termes de productivité (vitesse de soudage) et de qualité de joint (compacité et aspect du cordon) et des performarices mécaniques.

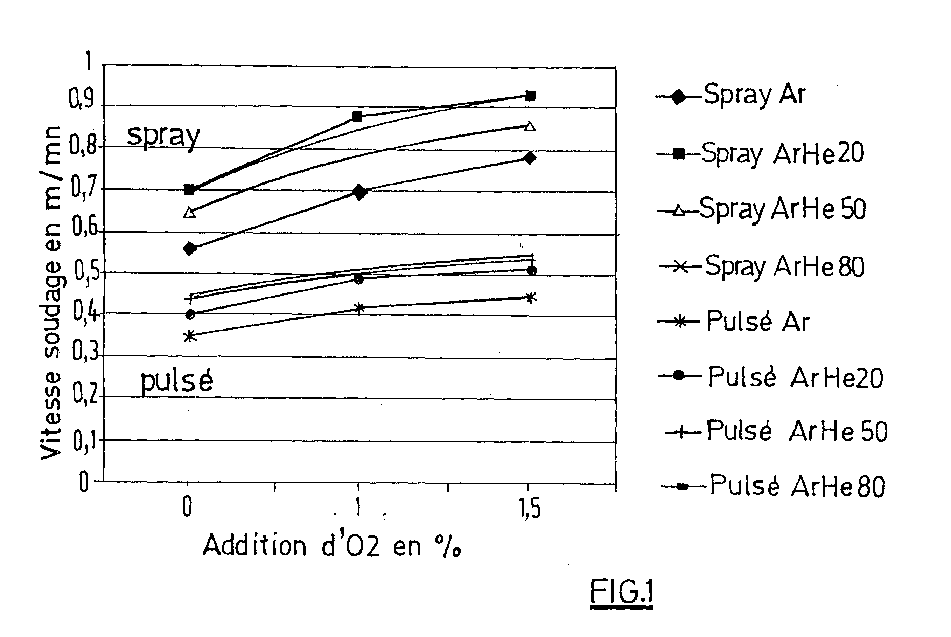

Dans le tableau Il suivant, les augmentations de vitesse données pour la nuance 5000 ont été déterminées par rapport aux vitesses de soudage pour différents mélanges argon / hélium et avec ou sans addition de O₂ et, à titre comparatif, les résultats obtenus avec de l'argon additionné d'O₂ ont aussi été donnés. Ces résultats sont schématisés sur la figure 1.

On constate donc qu'à additions d'O₂ identiques, le gain de performances, en vitesse de soudage et en pénétration, reste équivalent pour un mélange Ar/He et pour de l'argon seul.

**Tableau II : Gain de performances en vitesse de soudage pour nuance 5000 par rapport à un mélange ArHe sans addition de O2.**

| Régime | Spray | | | | Pulsé | | | |
|---|---|---|---|---|---|---|---|---|
| Gaz | Ar | Ar+20%He | Ar+50%He | Ar+70%He | Ar | Ar+20%He | Ar+50%He | Ar+70%He |
| 0%O2 | 0.56 | 0.7 | 0.65 | 0.7 | 0.35 | 0.4 | 0.44 | 0.45 |
| +1%O₂ | 0.7 | 0.88 | n.d. | n.d. | 0.42 | 0.49 | n.d. | n.d. |
| | 25% | 25.7% | n.d. | n.d. | 20% | 22.5% | n.d. | n.d. |
| +1.5% O₂ | 0.78 | 0.93 | 0.86 | 0.93 | 0.45 | 0.52 | 0.54 | 0.55 |
| | 39.2% | 32.8% | 32.3% | 32.8% | 28.5% | 30% | 22.7% | 22.2% |

| | | | | | | | | |
|---|---|---|---|---|---|---|---|---|
| Vitesse de soudage (Vs) : en m/mn Gain de vitesse : en% N.D. : non déterminé | | | | | | | | |

Au vu du tableau II, on constate une augmentation de la vitesse de soudage pour une soudure à pleine pénétration pour une épaisseur de 6 mm.

Par ailleurs, afin d'évaluer les performances en qualité de joint (compacité et aspect du cordon), des examens radiographiques ont été effectués sur les pièces de nuance 5000, lesquels n'ont pas révélé d'indications différentes de celles habituellement rencontrées en MIG Argon ou mélanges Ar/He.

En complément, des prélèvements macrographiques ont permis de mettre en évidence, par simple polissage, des plages d'inclusions de taille réduite (de l'ordre de 0,01 mm), de répartition et d'orientations différentes.

Ces plages ont été identifiées au microscope électronique à balayage comme plages d'alumine (Al₂O₃). En outre, l'aspect des cordons obtenus avec les mélanges Ar/He/O₂, se différencient sensiblement de ceux réalisés avec un mélange Ar/He : les cordons présentent un dépôt de surface noirâtre suivant la teneur en O₂ retenue qui s'élimine par brossage ou à l'aide d'un chiffon.

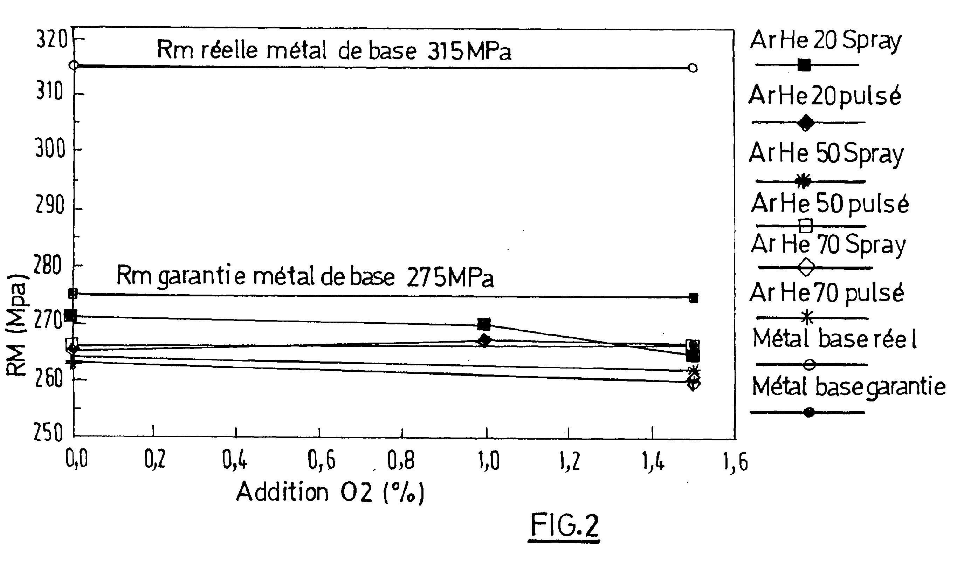

Ensuite, les performances mécaniques ont été évaluées à partir d'éprouvettes de traction travers arasées et de pliages travers. Les résultats de traction sont présentés sur la figure 2 où l'axe des abscisses représente les teneurs en O₂ dans trois mélanges Ar/He de compositions différentes et l'axe des ordonnées représente les valeurs de résistance (Rm) à la traction (en MPa) des assemblages de nuance 5000.

Les valeurs intrinsèques et les coefficients de joint (résistance du Métal Fondu / Résistance Métal de base) correspondants sont indiqués dans le Tableau III.

On ne note pas de dégradation significative des caractéristiques mécaniques de la zone fondue en fonction de l'augmentation de la teneur en O₂. La diminution maximale enregistrée de 7 N/mm² en régime spray sous mélange Ar/He (soit - 2.6%), reste inférieure à celle enregistrée pour le même régime de transfert sous Ar/O₂, à savoir 15 N/mm² (soit -5.5%).

**Tableau III : Caractéristiques mécaniques sur assemblages série 5086 pour des mélanges Ar/He avec addition d'O₂**

| Régime | | Spray | | | Pulsé | | |
|---|---|---|---|---|---|---|---|
| Gaz | | Ar+20%He | Ar+50%He | Ar+70%He | Ar+20%He | Ar+50%He | Ar+70%He |
| 0% O₂ | Rm Mpa | 271.12 | 263.2 | 266.47 | 265.03 | 266 | 264.03 |
| | Coeff joint | 0.86 | 0.83 | 0.84 | 0.84 | 0.84 | 0.83 |
| + 1% O₂ | Rm Mpa | 269.92 | n.d. | n.d. | 267.05 | n.d. | n.d. |
| | Coeff joint | 0.85 | n.d. | n.d. | 0.84 | n.d. | n.d. |
| + 1.5% O₂ | Rm Mpa | 264.72 | 260.12 | 259.71 | 266.61 | 266.4 | 261.68 |
| | Coeff joint | 0.84 | 0.82 | 0.82 | 0.84 | 0.84 | 0.83 |
| | MB Rm MPa réel /garanti | 315/275 | | | | | |

Toutes les éprouvettes de traction (épaisseur 6 mm) présentent une rupture systématique dans le métal fondu qui est un comportement normal pour la série 5000. Sur leur faciès de rupture, ont été mises en évidence des plages de fines inclusions noires dispersées. Ces indications confirment les résultats des examens macrographiques précédents. Elles peuvent devenir de plus en plus importantes en dimensions et densité en fonction de la teneur en O₂, mais comme susmentionné, leur influence n'est pas significative ni sur les propriétés mécaniques des assemblages, ni sur la capacité à la déformation puisque les résultats des essais de pliages sont satisfaisants (absence complète de défauts après sollicitation à 180°).

il s'ensuit donc (Fig. 1) qu'à addition d'O₂ identique, le gain de performances (augmentation de la pénétration ou vitesse de soudage) reste comparable sur un mélange Ar/He que sur de l'argon seul.

De plus, l'addition d'O₂ en quantité contrôlée (moins de 2%) permet de faire abstraction d'une préparation particulière, tel que chanfreinage et écartement, des pièces à souder jusqu'à des épaisseurs de 6 mm.

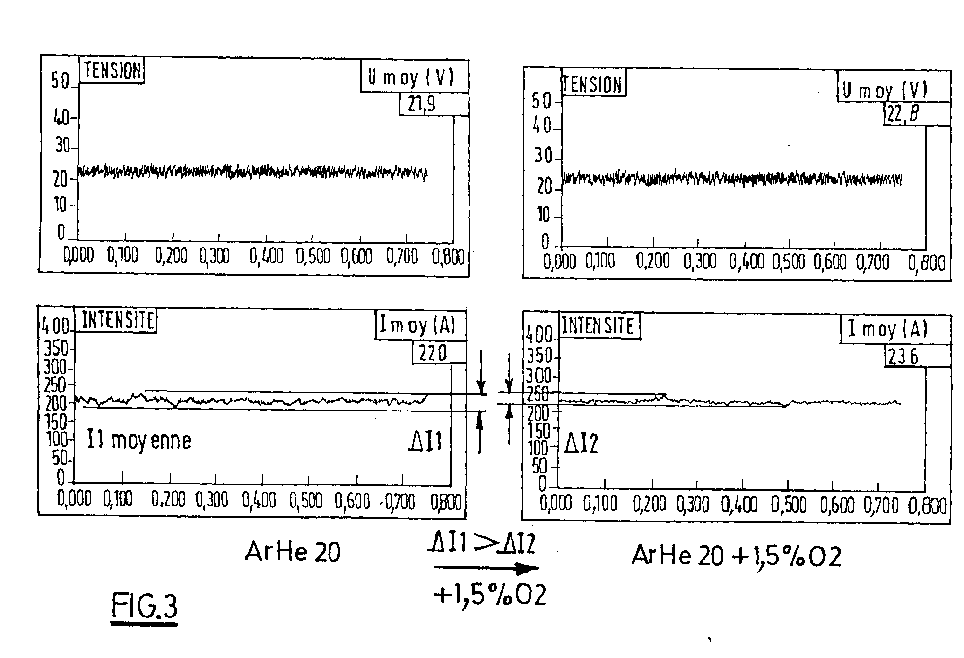

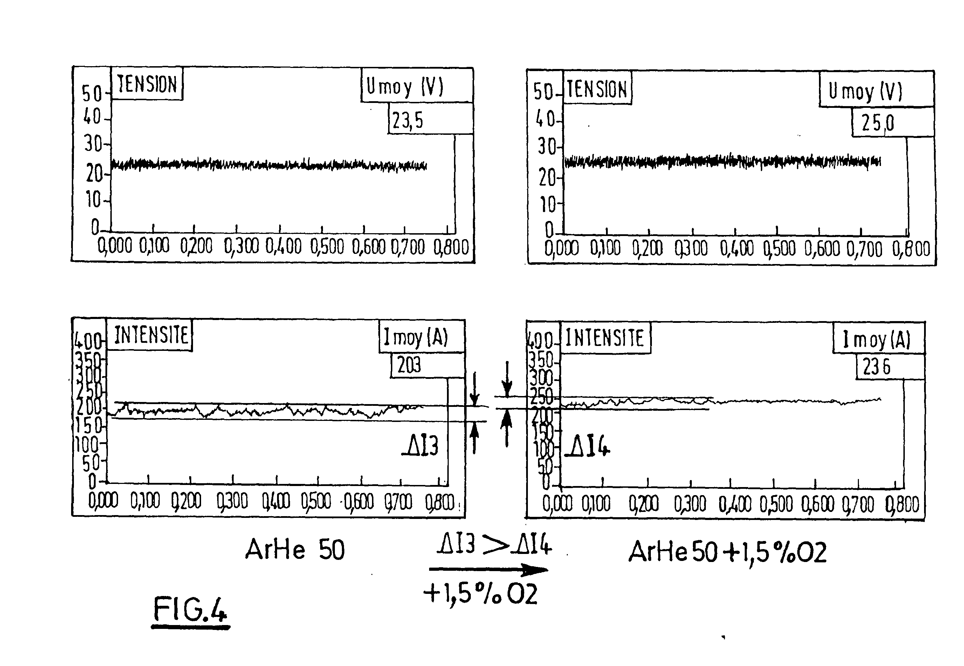

A ces gains de productivité, il faut ajouter également deux autres avantages opératoires substantiels, à savoir la facilité d'amorçage et la stabilité d'arc en régime établi. Un exemple comparatif schématisé en Figure 3 met en évidence sur des enregistrements, l'amélioration sensible obtenue de la stabilité du courant en régime spray sous mélange Ar/He/O₂ par rapport au régime spray sous Ar/He (teneur en hélium de 20 à 50% dans les deux cas), c'est-à-dire sans addition de O₂, comme montrés par les exemples comparatifs des figures 3 et 4 mettant en évidence sur des enregistrements Labview, l'amélioration de la stabilité du courant en régime spray pour mélange Ar/He additionné d'oxygène.

Ces avantages ont été mis en évidence non seulement sur aluminium pur mais aussi sur les alliages d'aluminium des séries 5000 et 6000.

## Revendications

1. Procédé de soudage MIG à régime spray sans modulation de courant ou à régime pulsé, de l'aluminium et des alliages d'aluminium, avec mise en oeuvre d'une protection gazeuse d'au moins une partie de la zone de soudage, **caractérisé en ce que** la protection gazeuse est un mélange gazeux constitué, en volume, de 0.8% à 1,80% d'oxygène et de 15% à 98,20% d'hélium, le solde éventuel étant constitué d'argon.

2. Procédé selon la revendication 1, **caractérisé en ce que** le gaz de protection contient de 0,9% à 1,80% d'oxygène, de 15% à 98,20% d'hélium et le solde étant de l'argon.

3. Procédé selon la revendication 1 ou 2, **caractérisé en ce que** le mélange gazeux de protection contient au moins 1% d'oxygène, de préférence au moins 1.1 % d'oxygène, préférentiellement encore au moins 1.2 % d'oxygène.

4. Procédé selon les revendications 1 à 3, **caractérisé en ce que** le mélange gazeux de protection contient au plus 1.70 % d'oxygène, de préférence au plus 1.65% d'oxygène.

5. Procédé selon les revendications 1 à 4, **caractérisé en ce qu'**on met en oeuvre un fil fusible plein

6. Procédé selon les revendications 1 à 5, **caractérisé en ce que** la vitesse de soudage est de 0.25 m/min à 2 m/min, de préférence de 0.60 à 1.5 m/min.

7. Procédé selon les revendications 1 à 6, **caractérisé en ce que** la vitesse de fil est de 2.5 m/min à 25 m/min, de préférence de 4 m/min à 20 m/min.

8. Procédé selon les revendications 1 à 7, **caractérisé en ce que** l'intensité moyenne de soudage est de 40 A à 450 A et/ou **en ce que** la tension moyenne de soudage est de 15 V à 40 V.

9. Procédé selon les revendications 1 à 8, **caractérisé en ce que** le procédé est à régime pulsé et/ou **en ce que** l'intensité de soudage est de 120 A à 350 A et/ou **en ce que** la tension moyenne de soudage est de 19 V à 32 V.

10. Procédé selon les revendications 1 à 8, **caractérisé en ce que** le procédé est à régime spray et/ou **en ce que** l'intensité de soudage est de 180 A à 450 A et/ou **en ce que** la tension moyenne de soudage est de 19 V à 39 V.

## Claims

1. Process for the MIG welding, in spray mode without current modulation or in pulsed mode, of aluminium and aluminium alloys, with the use of a gas shield for at least part of the welding zone, **characterized in that** the gas shield is a gas mixture consisting, by volume, of from 0.8% to 1.80% oxygen and from 15% to 98.20% helium, the balance possibly consisting of argon.

2. Process according to Claim 1, **characterized in that** the shielding gas contains from 0.9% to 1.80% oxygen and from 15% to 98.20% helium, the balance being argon.

3. Process according to Claim 1 or 2, **characterized in that** the shielding gas mixture contains at least 1% oxygen, preferably at least 1.1% oxygen, more preferably at least 1.2% oxygen.

4. Process according to Claims 1 to 3, **characterized in that** the shielding gas mixture contains at most 1.70% oxygen, preferably at most 1.65% oxygen.

5. Process according to Claims 1 to 4, **characterized in that** a solid meltable wire is used.

6. Process according to Claims 1 to 5, **characterized in that** the welding speed is from 0.25 m/min. to 2 m/min., preferably from 0.60 to 1.5 m/min.

7. Process according to Claims 1 to 6, **characterized in that** the wire speed is from 2.5 m/min. to 25 m/min., preferably from 4 m/min. to 20 m/min.

8. Process according to Claims 1 to 7, **characterized in that** the mean welding current is from 40 A to 450 A and/or the mean welding voltage is from 15 V to 40 V.

9. Process according to Claims 1 to 8, **characterized in that** the process is in pulsed mode and/or the welding current is from 120 A to 350 A and/or the mean welding voltage is from 19 V to 32 V.

10. Process according to Claims 1 to 8, **characterized in that** the process is in spray mode and/or the welding current is from 180 A to 450 A and/or the mean welding voltage is from 19 V to 39 V.

## Patentansprüche

1. Verfahren zum MIG-Schweißen von Aluminium und Aluminiumlegierungen mit Sprühlichtbogen ohne Strommodulation oder mit Impulslichtbogen, bei Anwendung eines Gasschutzes auf wenigstens einen Teil der Schweißzone, **dadurch gekennzeichnet, dass** der Gasschutz ein Gasgemisch ist, das aus 0,8 Vol.-% bis 1,80 vol.-% Sauerstoff und 15 vol.-% bis 98,20 Vol.-% Helium besteht, wobei der eventuelle Saldo ein Argonvolumen darstellt.

2. Verfahren nach Anspruch 1, **dadurch gekennzeichnet, dass** das Schutzgas 0,9 Vol.-% bis 1,80 Vol.-% Sauerstoff, 15 Vol.-% bis 98,20 Vol.-% Helium enthält und der Saldo Argon ist.

3. Verfahren nach Anspruch 1 oder 2, **dadurch gekennzeichnet, dass** das Schutzgasgemisch mindestens 1 Vol.-% Sauerstoff, vorzugsweise mindestens 1,1 Vol.-% Sauerstoff, insbesondere noch mindestens 1,2 Vol.-% Sauerstoff enthält.

4. Verfahren nach den Ansprüchen 1 bis 3, **dadurch gekennzeichnet, dass** das Schutzgasgemisch höchstens 1,7 Vol.-% Sauerstoff, vorzugsweise höchstens 1,65 Vol.-% Sauerstoff enthält.

5. Verfahren nach den Ansprüchen 1 bis 4, **dadurch gekennzeichnet, dass** ein massiver Schweißdraht benutzt wird.

6. Verfahren nach den Ansprüchen 1 bis 5, **dadurch gekennzeichnet, dass** die Schweißgeschwindigkeit zwischen 0,25 m/min und 2 m/min, vorzugsweise zwischen 0,60 und 1,5 m/min ist.

7. Verfahren nach den Ansprüchen 1 bis 6, **dadurch gekennzeichnet, dass** die Drahtgeschwindigkeit zwischen 2,5 m/min und 25 m/min, vorzugsweise zwischen 4 m/min und 20 m/min ist.

8. Verfahren nach den Ansprüchen 1 bis 7, **dadurch gekennzeichnet, dass** die mittlere Schweißstromstärke zwischen 40 A und 450 A ist, und/oder dadurch, dass die mittlere Schweißspannung zwischen 15 V und 40 V ist.

9. Verfahren nach den Ansprüchen 1 bis 8, **dadurch gekennzeichnet, dass** es ein Impulslichtbogen-Verfahren ist, und/oder dadurch, dass die Schweißstromstärke zwischen 120 A und 350 A ist, und/oder dadurch, dass die mittlere Schweißspannung zwischen 19 und 32 V ist.

10. Verfahren nach den Ansprüchen 1 bis 8, **dadurch gekennzeichnet, dass** es ein Sprühlichtbogen-Verfahren ist, und/oder dadurch, dass die Schweißstromstärke zwischen 180 A und 450 A ist, und/oder dadurch, dass die mittlere Schweißspannung zwischen 19 V und 39 V ist.
